# EUROPEAN PATENT APPLICATION

(11) **EP 4 700 842 A1**
(43) Date of publication of application: **25.02.2026**
(21) Application number: 23934434.4
(22) Date of filing: 25.04.2023
(51) Int. Cl.: H01M 4/131, H01M 4/66

(54) **POSITIVE ELECTRODE SHEET, SECONDARY BATTERY, AND ELECTRIC DEVICE**

(71) Applicant: Contemporary Amperex Technology Co., Limited, Ningde, Fujian 352100 (CN)
(72) Inventor: LIU, Qiang, Ningde, Fujian 352100 (CN); ZHANG, Le, Ningde, Fujian 352100 (CN); QIN, Pengcheng, Ningde, Fujian 352100 (CN); SUN, Yu, Ningde, Fujian 352100 (CN); LI, Baiqing, Ningde, Fujian 352100 (CN); JIN, Haizu, Ningde, Fujian 352100 (CN)
(74) Representative: Gong, Jinping
(86) International application number: PCT/CN2023/090630
(87) International publication number: WO 2024/221229

(57) **Abstract**

This application provides a positive electrode plate, a secondary battery, and an electric apparatus. The positive electrode plate includes a positive electrode current collector and a positive electrode film layer disposed on at least one side of the positive electrode current collector, where the positive electrode film layer includes one or more first active layers and one or more second active layers arranged along a thickness direction of the positive electrode current collector, the first active layers and the second active layers being alternately stacked; the first active layer includes a layered oxide active material and a first binder, the first binder including a first copolymer; and the second active layer includes a phosphate-based positive electrode active material and a second binder, the second binder including a fluorinated monomer homopolymer and/or a second copolymer, where monomers forming the first copolymer and the second copolymer each independently include a fluorinated monomer. This enhances peel strength of the positive electrode plate.

## Description

### TECHNICAL FIELD

This application relates to the field of battery technology, and in particular, to a positive electrode plate, a secondary battery, and an electric apparatus.

### BACKGROUND

Lithium-ion batteries feature high energy density and long lifespan, making them an ideal energy source for electric vehicles and other electric tools. Currently, there are various methods to improve the cycling performance of lithium-ion batteries, such as implementing doping or coating modifications to the positive electrode material to mitigate the deterioration of the crystal structure of the positive electrode material during cycling, or combining positive electrode materials having different advantages to complement each other, thereby enhancing the cycling performance and energy density of the batteries. For instance, a lithium iron phosphate-based positive electrode material is combined with a layered oxide material, such as ternary positive electrode materials. Specifically, the two are mixed, and a resulting mixture is then mixed with a binder, a conductive agent, or the like to produce a slurry for coating, or the two are each mixed with the binder and the conductive agent for multilayer coating.

### SUMMARY

This application provides a positive electrode plate, a secondary battery, and an electric apparatus, so as to enhance peel strength of the positive electrode plate.

A first aspect of this application provides a positive electrode plate. The positive electrode plate includes a positive electrode current collector and a positive electrode film layer disposed on at least one side of the positive electrode current collector, where the positive electrode film layer includes one or more first active layers and one or more second active layers arranged along a thickness direction of the positive electrode current collector, the first active layers and the second active layers being alternately stacked; the first active layer includes a layered oxide active material and a first binder, the first binder including a first copolymer; and the second active layer includes a phosphate-based positive electrode active material and a second binder, the second binder including a fluorinated monomer homopolymer and/or a second copolymer, where monomers forming the first copolymer and the second copolymer each independently include a fluorinated monomer.

A fluorinated monomer is typically an unsaturated compound formed after one or more H atoms in an unsaturated compound are substituted with fluorine atoms, containing C-F bonds. Since C-F bonds are prone to break in an alkaline environment to produce free F ions, when a homopolymer contains both a large number of C-F and C-H bonds, the breaking of C-F bonds generates free F ions that combine with free hydrogen from broken C-H bonds to form HF and carbon-carbon double bonds. This leads to crosslinking within or between molecular chains of the homopolymer, resulting in slurry gelation. The first copolymer and the second copolymer for the fluorinated monomers utilize the fluorinated monomers to provide excellent adhesion, and utilize combination of fluorinated monomers and other monomers to adjust the ratio of C-F bonds to C-H bonds. This suppresses the reaction that forms HF and carbon-carbon double bonds, making the positive electrode slurry used for coating to form the first active layer less prone to gelation. The suppression of gelation of the positive electrode slurry not only ensures the coatability of the positive electrode slurry, but also allows the adhesive performance of the binder to be fully exerted. Therefore, the use of the first copolymer effectively improves the peel strength of the positive electrode film layer and the cycling performance of the battery cell.

A second aspect of this application provides a positive electrode plate. The positive electrode plate includes a positive electrode current collector and a positive electrode film layer disposed on at least one side of the positive electrode current collector, where the positive electrode film layer includes one or more first active layers and one or more second active layers arranged along a thickness direction of the positive electrode current collector, the first active layers and the second active layers being alternately stacked; the first active layer includes a first positive electrode active material and a first binder, the first binder includes a first copolymer, and a mixed slurry with a mass percentage of 10% formed by mixing the first positive electrode active material with water has a pH value between 11 and 13; and the second active layer includes a second positive electrode active material and a second binder, the second binder includes a fluorinated monomer homopolymer and/or a second copolymer, and a mixed slurry with a mass percentage of 10% formed by mixing the second positive electrode active material with water is alkaline and has a pH value below 10, where monomers forming the first copolymer and the second copolymer each independently include a fluorinated monomer.

A fluorinated monomer is typically an unsaturated compound formed after one or more H atoms in an unsaturated compound are substituted with fluorine atoms, containing C-F bonds. Since C-F bonds are prone to break in a highly alkaline environment to produce free F ions, when a homopolymer contains both a large number of C-F and C-H bonds, the breaking of C-F bonds generates free F ions that combine with free hydrogen from broken C-H bonds to form HF and carbon-carbon double bonds. This leads to crosslinking within or between molecular chains of the homopolymer, resulting in slurry gelation. The first copolymer and the second copolymer for the fluorinated monomers utilize the fluorinated monomers to provide excellent adhesion, and utilize combination of fluorinated monomers and other monomers to adjust the ratio of C-F bonds to C-H bonds. This suppresses the reaction that forms HF and carbon-carbon double bonds. When the first copolymer is used in combination with the first positive electrode active material with a higher pH value, it is difficult for the positive electrode slurry used for coating to form the first active layer less prone to gelation. The suppression of gelation of the positive electrode slurry not only ensures the coatability of the positive electrode slurry, but also allows the adhesive performance of the binder to be fully exerted. Therefore, the use of the first copolymer effectively improves the peel strength of the positive electrode film layer and the cycling performance of the battery cell.

In any embodiment of the first aspect and the second aspect, the fluorinated monomers forming the first copolymer and the second copolymer each independently include any one or more selected from a group of vinyl fluoride, vinylidene fluoride, trifluoroethylene, tetrafluoroethylene, hexafluoropropylene, and perfluoroalkyl vinyl ether, thereby maximizing the adhesion performance of the binder containing the same.

In any embodiment of the first aspect and the second aspect, the first copolymer and the second copolymer each independently include one or more selected from a group of vinylidene fluoride-hexafluoropropylene copolymer, vinylidene fluoride-ethylene oxide copolymer, vinylidene fluoride-tetrafluoroethylene copolymer, tetrafluoroethylene-hexafluoropropylene copolymer, tetrafluoroethylene-perfluoroalkyl vinyl ether copolymer, vinylidene fluoride-trifluoroethylene copolymer, vinylidene fluoride-trichloroethylene copolymer, vinylidene fluoride-vinyl fluoride copolymer, and vinylidene fluoride-hexafluoropropylene-tetrafluoroethylene copolymer.

In any embodiment of the first aspect and the second aspect, the fluorinated monomers of the first copolymer and the second copolymer contain vinylidene fluoride; and the first copolymer and the second copolymer each independently include one or more selected from a group of vinylidene fluoride-hexafluoropropylene copolymer, vinylidene fluoride-ethylene oxide copolymer, vinylidene fluoride-tetrafluoroethylene copolymer, vinylidene fluoride-trifluoroethylene copolymer, vinylidene fluoride-trichloroethylene copolymer, vinylidene fluoride-vinyl fluoride copolymer, and vinylidene fluoride-hexafluoropropylene-tetrafluoroethylene copolymer. The vinylidene fluoride monomers are utilized to enhance the adhesion performance of the copolymer, and other monomers such as hexafluoropropylene in the copolymer are utilized to adjust the ratio of C-F bonds to C-H bonds, particularly adjusting the content of C-F bonds to be significantly higher than the content of C-H bonds, thereby better preventing the occurrence of the HF-forming reaction while improving the adhesion performance of the copolymer.

Molar percentages of structural units corresponding to vinylidene fluoride monomers in the first copolymer and the second copolymer are each independently 50% to 95%, thereby mitigating slurry gelation while maximizing adhesion.

In any embodiment of the first aspect and the second aspect, the second binder is a fluorinated monomer homopolymer; and optionally, the fluorinated monomer homopolymer is a vinylidene fluoride homopolymer. Experiments have found that when the second binder is a vinylidene fluoride copolymer, the second positive electrode slurry exhibits slight gelation instead. Therefore, the use of a vinylidene fluoride homopolymer can prevent gelation caused by copolymers.

In any embodiment of the first aspect and the second aspect, optionally, a weight-average molecular weight of the first copolymer, the second copolymer, and the fluorinated monomer homopolymer is each independently 100,000 Da to 1,000,000 Da.

In any embodiment of the first aspect and the second aspect, the positive electrode plate satisfies any one or more of the following conditions:
a mass percentage of the first binder in the first active layer is 0.5% to 2.5%;
a mass percentage of the second binder in the second active layer is 0.5% to 2.5%; and
the first active layer and the second active layer each independently include a conductive agent. These content limitations ensure sufficient adhesion while preventing a reduction in the energy density of the positive electrode film layer caused by excessive binder usage. The use of the conductive agent enhances the conductivity of the positive electrode film layer.

In any embodiment of the first aspect, a mixed slurry with a mass percentage of 10% formed by mixing the layered oxide active material with water has a pH value between 11 and 13.

In any embodiment of the second aspect, the first positive electrode active material includes a layered oxide active material.

In any embodiment of the first aspect and the second aspect, the layered oxide active material includes a ternary positive electrode material and/or a quaternary positive electrode material; and optionally, the layered oxide active material includes one or more selected from a group of lithium nickel cobalt manganese oxide positive electrode active material, lithium nickel cobalt aluminate positive electrode active material, lithium nickel cobalt manganese aluminate positive electrode active material, doped or coated lithium nickel cobalt manganese oxide positive electrode active material, doped or coated lithium nickel cobalt aluminate positive electrode active material, and doped or coated lithium nickel cobalt manganese aluminate positive electrode active material.

In any embodiment of the first aspect and the second aspect, a surface of the layered oxide active material has a first coating layer, where the first coating layer includes one or more coating layers selected from carbon, conductive graphene, conductive polymer material, and oxide, to further enhance the conductivity of the layered oxide active material, increase the lithium-ion migration speed, and improve the rate performance of the battery.

In any embodiment of the first aspect, a mixed slurry with a mass percentage of 10% formed by mixing the phosphate-based positive electrode active material with water has a pH value between 8 and 10.

In any embodiment of the second aspect, a mixed slurry with a mass percentage of 10% formed by mixing the second positive electrode active material with water has a pH value between 8 and 10; and optionally, the second positive electrode active material is a phosphate-based positive electrode active material.

In any embodiment of the first aspect and the second aspect, optionally, the phosphate-based positive electrode active material includes at least one of the following materials: LiMn_{1-yF}e_{y}PO₄, where y is any value in a range of 0.001 to 0.5; Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; and Li_{1+w}AₘMn₁₋ᵤEᵤP₁₋ₐRₐO₄₋ₙDₙ, where A includes one or more elements selected from Zn, Al, Na, K, Mg, Nb, Mo, and W, E includes one or more elements selected from Zn, Al, Na, K, Mg, Mo, W, Ti, V, Zr, Fe, Ni, Co, Ga, Sn, Sb, Nb, and Ge, R includes one or more elements selected from B, S, Si, and N, D includes one or more elements selected from S, F, Cl, and Br, w is any value in a range of -0.100 to 0.100, m is any value in a range of 0.001 to 0.1, u is any value in a range of 0.001 to 0.500, a is any value in a range of 0.001 to 0.100, n is any value in a range of 0.001 to 0.1, and Li_{1+w}AₘMn₁₋ᵤEᵤP₁₋ₐRₐO₄₋ₙDₙ is electrically neutral. Doping enhances the cycling performance or rate performance of the material.

In any embodiment of the first aspect and the second aspect, a surface of the phosphate-based positive electrode active material has a second coating layer, where the second coating layer includes one or more coating layers selected from pyrophosphate, phosphate, and carbon.

In any embodiment of the first aspect and the second aspect, one first active layer and two second active layers are present, with the first active layer disposed between the two second active layers; and/or two first active layers and one second active layer are present, with the second active layer disposed between the two first active layers. The first active layer containing the layered oxide active material in the positive electrode film layer has significantly improved film layer uniformity and peel strength than that using a same content of vinylidene fluoride homopolymer.

In any embodiment of the first aspect and the second aspect, a ratio of a thickness of the first active layer to a thickness of the second active layer is 0.9:1 to 1.1:1; and optionally, the thickness of the first active layer is 60 µm to 65 µm, and the thickness of the second active layer is 60 µm to 65 µm. The proportion of the two active materials can be adjusted by adjusting the thicknesses of the first active layer and the second active layer within this range, thereby tuning the performance of the battery cell.

A third aspect of this application provides a secondary battery including a positive electrode plate and a negative electrode plate, where the positive electrode plate includes the positive electrode plate according to any one embodiment of the first aspect. The positive electrode plate exhibits good cycling performance.

A fourth aspect of this application provides an electric apparatus including a secondary battery, where the secondary battery includes the secondary battery according to any one of the above embodiments. The secondary battery of the electric apparatus has a long service life.

### BRIEF DESCRIPTION OF DRAWINGS

To more clearly illustrate the technical solutions of the embodiments of this application, the drawings required for use in the embodiments of this application are briefly described below. It is apparent that the drawings described below are merely some embodiments of this application, and those of ordinary skill in the art can obtain other drawings based on these drawings without creative effort.
FIG. 1 is a schematic cross-sectional view of a positive electrode plate according to an embodiment of this application.
FIG. 2 is a schematic cross-sectional view of a positive electrode plate according to an embodiment of this application.
FIG. 3 is a schematic cross-sectional view of a positive electrode plate according to an embodiment of this application.
FIG. 4 is a schematic cross-sectional view of a positive electrode plate according to an embodiment of this application.
FIG. 5 is a schematic cross-sectional view of a positive electrode plate according to an embodiment of this application.
FIG. 6 is a schematic cross-sectional view of a positive electrode plate according to an embodiment of this application.
FIG. 7 is a schematic diagram of a secondary battery according to an embodiment of this application.
FIG. 8 is an exploded view of the secondary battery according to the embodiment of this application in FIG. 7.
FIG. 9 is a schematic diagram of a battery module according to an embodiment of this application.
FIG. 10 is a schematic diagram of a battery pack according to an embodiment of this application.
FIG. 11 is an exploded view of the battery pack according to the embodiment of this application in FIG. 10.
FIG. 12 is a schematic diagram of an electric apparatus using a secondary battery as a power source according to an embodiment of this application.

The accompanying drawings are not drawn to scale.

### Description of reference signs:

10. positive electrode current collector; 21. first active layer; 22. second active layer;
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The embodiments of this application are described in further detail below with reference to the accompanying drawings and examples. The detailed descriptions of the following examples and the accompanying drawings are used to exemplarily illustrate the principles of this application but cannot be used to limit the scope of this application, meaning that this application is not limited to the described embodiments.

The following details the embodiments specifically disclosing a positive electrode slurry composition, a positive electrode plate, a secondary battery, and an electric apparatus of this application with appropriate reference to the drawings. However, unnecessary detailed descriptions may be omitted. For example, detailed descriptions of well-known matters or redundant descriptions of substantially identical structures may be omitted. This is to avoid making the following description unnecessarily lengthy and to facilitate understanding by those skilled in the art. Additionally, the drawings and the following descriptions are provided to enable those skilled in the art to fully understand this application and are not intended to limit the subject matter recited in the claims.

"Ranges" disclosed in this application are defined in the form of lower and upper limits. A given range is defined by selecting one lower limit and one upper limit, where the selected lower and upper limits define the boundaries of that specific range. Ranges defined in this manner may include or exclude the endpoints and may be arbitrarily combined, meaning that any lower limit may be combined with any upper limit to form a range. For example, if ranges of 60-120 and 80-110 are provided for a specific parameter, it is understood that ranges of 60-110 and 80-120 can also be envisioned. Additionally, if minimum range values of 1 and 2 are listed, and maximum range values of 3, 4, and 5 are listed, the following ranges can all be anticipated: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. Additionally, when a parameter is expressed as an integer ≥ 2, it is equivalent to disclosing that the parameter is, for example, an integer 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps in this application can be performed sequentially or randomly, preferably sequentially. For example, a method including steps (a) and (b) indicates that the method may include steps (a) and (b) performed sequentially or may include steps (b) and (a) performed sequentially. For example, the method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or exclusive. For example, "include" and "contain" may indicate that other components not listed may also be included or contained, or only the listed components may be included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

A secondary battery, also known as a rechargeable battery or storage battery, is a battery that can be recharged after discharge to reactivate an active material for continued use.

Typically, a secondary battery includes a positive electrode plate, a negative electrode plate, an electrolyte, and an optional separator (a separator may not be provided for solid-state batteries, but a separator needs to be provided for liquid-state batteries). During the charging and discharging process of the battery, active ions (such as lithium ions or sodium ions) intercalate and deintercalate back and forth between the positive electrode plate and the negative electrode plate. The separator is disposed between the positive electrode plate and the negative electrode plate, primarily to prevent short circuits between the positive and negative electrodes while allowing active ions to pass through. The electrolyte conducts active ions between the positive electrode plate and the negative electrode plate.

### [Positive electrode plate]

As described in the background, combination of a lithium iron phosphate-based positive electrode material and a layered oxide is a method to improve the performance of positive electrode materials. When the two are combined, whether to form a mixed slurry or separate slurries, the same type of binder is typically used. However, during application, the peel strength of the positive electrode plate is insufficient. Research has revealed that compared to a positive electrode slurry containing a lithium iron phosphate-based positive electrode material, a positive electrode slurry containing a layered oxide are more prone to produce chemical gels during stirring. This significantly reduces the filterability and adhesion of the slurry, affecting coating performance of the slurry, lowering the processability of the positive electrode plate, and reducing the peel strength of the positive electrode plate, which ultimately impacts the cycling performance of the battery cell. The reason may be that the layered oxide has a large amount of residual alkali on its surface, so the layered oxide has a strong alkalinity. Consequently, when the layered oxide is used as the positive electrode active material to prepare a slurry, viscosity becomes higher, leading to gelation. In severe cases, the slurry entirely losses its coating performance.

To address this issue, the applicant has explored various approaches, such as reducing the alkalinity of the layered oxide through coating, but this method is technically complex. When a copolymer of vinylidene fluoride is used as a binder for the layered oxide, the slurry is relatively stable and less prone to gelation. Therefore, a first embodiment of this application provides a positive electrode plate, where the positive electrode plate includes a positive electrode current collector and a positive electrode film layer disposed on at least one side of the positive electrode current collector, where the positive electrode film layer includes one or more first active layers and one or more second active layers arranged along a thickness direction of the positive electrode current collector, the first active layers and the second active layers being alternately stacked; the first active layer includes a layered oxide active material and a first binder, the first binder including a first copolymer; and the second active layer includes a phosphate-based positive electrode active material and a second binder, the second binder including a fluorinated monomer homopolymer and/or a second copolymer, where monomers forming the first copolymer and the second copolymer each independently include a fluorinated monomer.

The arrangement of alternately stacked first active layers and second active layers includes, but is not limited to, any one of the following configurations:
a configuration with one first active layer and one second active layer stacked, a configuration with one first active layer disposed between two second active layers, a configuration with one second active layer disposed between two first active layers, and a configuration with multiple first active layers and multiple second active layers alternately stacked.

A fluorinated monomer is typically an unsaturated compound formed after one or more H atoms in an unsaturated compound are substituted with fluorine atoms, containing C-F bonds. Since C-F bonds are prone to break in an alkaline environment to produce free F ions, when a homopolymer contains both a large number of C-F and C-H bonds, the breaking of C-F bonds generates free F ions that combine with free hydrogen from broken C-H bonds to form HF and carbon-carbon double bonds. This leads to crosslinking within or between molecular chains of the homopolymer, resulting in slurry gelation. When the first copolymer and the second copolymer for the fluorinated monomers are used as binders, fluorinated monomers are utilized to provide excellent adhesion, and combination of fluorinated monomers and other monomers are utilized to adjust the ratio of C-F bonds to C-H bonds. This suppresses the reaction that forms HF and carbon-carbon double bonds, making the positive electrode slurry used for coating to form the first active layer less prone to gelation. The suppression of gelation of the positive electrode slurry not only ensures the coatability of the positive electrode slurry, but also allows the adhesive performance of the binder to be fully exerted. Therefore, the use of the first copolymer effectively improves the peel strength of the positive electrode film layer and the cycling performance of the battery cell.

Even in the preparation of a positive electrode plate containing multiple positive electrode active materials, higher pH values of the positive electrode active materials exacerbate gelation issues, leading to greater coating difficulties. When the materials are applied to the positive electrode plate, the peel strength of the positive electrode plate is more severely affected. To address this issue, a second embodiment of this application provides a positive electrode plate. The positive electrode plate includes a positive electrode current collector and a positive electrode film layer disposed on at least one side of the positive electrode current collector, where the positive electrode film layer includes one or more first active layers and one or more second active layers arranged along a thickness direction of the positive electrode current collector, the first active layers and the second active layers being alternately stacked; the first active layer includes a first positive electrode active material and a first binder, the first binder includes a first copolymer, and a mixed slurry with a mass percentage of 10% formed by mixing the first positive electrode active material with water has a pH value between 11 and 13; and the second active layer includes a second positive electrode active material and a second binder, the second binder includes a fluorinated monomer homopolymer and/or a second copolymer, and a mixed slurry with a mass percentage of 10% formed by mixing the second positive electrode active material with water is alkaline and has a pH value below 10, where monomers forming the first copolymer and the second copolymer each independently include a fluorinated monomer.

A fluorinated monomer is typically an unsaturated compound formed after one or more H atoms in an unsaturated compound are substituted with fluorine atoms, containing C-F bonds. Since C-F bonds are prone to break in a highly alkaline environment to produce free F ions, when a homopolymer contains both a large number of C-F and C-H bonds, the breaking of C-F bonds generates free F ions that combine with free hydrogen from broken C-H bonds to form HF and carbon-carbon double bonds. This leads to crosslinking within or between molecular chains of the homopolymer, resulting in slurry gelation. The first copolymer and the second copolymer for the fluorinated monomers utilize the fluorinated monomers to provide excellent adhesion, and utilize combination of fluorinated monomers and other monomers to adjust the ratio of C-F bonds to C-H bonds. This suppresses the reaction that forms HF and carbon-carbon double bonds. When the first copolymer is used in combination with the first positive electrode active material with a higher pH value, it is difficult for the positive electrode slurry used for coating to form the first active layer less prone to gelation. The suppression of gelation of the positive electrode slurry not only ensures the coatability of the positive electrode slurry, but also allows the adhesive performance of the binder to be fully exerted. Therefore, the use of the first copolymer effectively improves the peel strength of the positive electrode film layer and the cycling performance of the battery cell.

The pH value can be measured using the following method: 5 g of sample powder is weighed into a conical flask, 45 g of deionized water is added to the flask in a 1:9 powder-to-solvent ratio, a magnetic stirrer is inserted, and the flask opening is sealed with a sealing film. A prepared solution is placed in the center of a magnetic stirrer platform, stirred for 30 minutes, left standing for 1.5 hours after stirring, and a pH value is measured by fully immersing the pH electrode glass bulb in the solution, with the pH reading stabilized for at least 1 minute.

Both the first copolymer and the second copolymer used in this application can be formed using conventional copolymers with fluorinated monomers or conventional copolymerization methods. In some embodiments, the fluorinated monomers forming the first copolymer and the second copolymer each independently include any one or more from a group of vinyl fluoride, vinylidene fluoride, trifluoroethylene, tetrafluoroethylene, hexafluoropropylene, and perfluoroalkyl vinyl ether, thereby maximizing the adhesion performance of the binder containing the same. That the fluorinated monomers forming the first copolymer and the second copolymer each independently include any one or more from a group of vinyl fluoride, vinylidene fluoride, trifluoroethylene, tetrafluoroethylene, hexafluoropropylene, and perfluoroalkyl vinyl ether means that the fluorinated monomers forming the first copolymer and the second copolymer may be selected from the group of vinyl fluoride, vinylidene fluoride, trifluoroethylene, tetrafluoroethylene, hexafluoropropylene, and perfluoroalkyl vinyl ether, and may also include other types of fluorinated monomers.

In some embodiments, the first copolymer and the second copolymer each independently include one or more selected from a group of vinylidene fluoride-hexafluoropropylene copolymer, vinylidene fluoride-ethylene oxide copolymer, vinylidene fluoride-tetrafluoroethylene copolymer, tetrafluoroethylene-hexafluoropropylene copolymer, tetrafluoroethylene-perfluoroalkyl vinyl ether copolymer, vinylidene fluoride-trifluoroethylene copolymer, vinylidene fluoride-trichloroethylene copolymer, vinylidene fluoride-vinyl fluoride copolymer, and vinylidene fluoride-hexafluoropropylene-tetrafluoroethylene copolymer.

In some embodiments, the fluorinated monomers of the first copolymer and the second copolymer needs to include vinylidene fluoride; and the first copolymer and the second copolymer each independently include one or more selected from a group of vinylidene fluoride-hexafluoropropylene copolymer, vinylidene fluoride-ethylene oxide copolymer, vinylidene fluoride-tetrafluoroethylene copolymer, vinylidene fluoride-trifluoroethylene copolymer, vinylidene fluoride-trichloroethylene copolymer, vinylidene fluoride-vinyl fluoride copolymer, and vinylidene fluoride-hexafluoropropylene-tetrafluoroethylene copolymer. The vinylidene fluoride monomers are utilized to enhance the adhesion performance of the copolymer, and other monomers such as hexafluoropropylene in the copolymer are utilized to adjust the ratio of C-F bonds to C-H bonds, particularly adjusting the content of C-F bonds to be significantly higher than the content of C-H bonds, thereby better preventing the occurrence of the HF-forming reaction while improving the adhesion performance of the copolymer.

A higher content of vinylidene fluoride structural units in the copolymer leads to a better adhesion. To mitigate slurry gelation while maximizing adhesion, in some embodiments, molar percentages of the structural units corresponding to vinylidene fluoride monomers in the first copolymer and the second copolymer are each independently 50% to 95%.

The second binder may be a vinylidene fluoride homopolymer and/or a vinylidene fluoride copolymer. Due to the higher cost of vinylidene fluoride copolymers, in some embodiments, the second binder may optionally include a vinylidene fluoride homopolymer. Experiments have found that when the second binder is a vinylidene fluoride copolymer, since the lithium manganese iron phosphate material has small particle size, gelation occurs due to the entanglement and agglomeration of small particles in the vinylidene fluoride copolymer system with the vinylidene fluoride copolymer. Therefore, the use of a vinylidene fluoride homopolymer can prevent gelation caused by copolymers.

As a general rule, a higher molecular weight of a homopolymer or a copolymer leads to a higher viscosity. However, polymers within the molecular weight range suitable for use as binders can be used in this application. In some embodiments, optionally, weight-average molecular weights of the first copolymer, the second copolymer, and the fluorinated monomer homopolymer are each independently 100,000 Da to 1,000,000 Da.

For the amounts of the first binder and the second binder in this application, reference may be made to the conventional binder usage in positive electrode film layers. In some embodiments, a mass percentage of the first binder in the first active layer is 0.5% to 2.5%; and/or a mass percentage of the second binder in the second active layer is 0.5% to 2.5%. This ensures sufficient adhesion while preventing a reduction in the energy density of the positive electrode film layer caused by excessive binder usage.

To enhance the conductivity of the formed positive electrode film layer, in some embodiments, the first active layer and the second active layer each independently include a conductive agent. In an example, the conductive agent may include at least one of superconducting carbon, acetylene black, carbon black, Ketjen black, carbon dots, carbon nanotubes, graphene, or carbon nanofibers.

In some embodiments, the first positive electrode active material includes a layered oxide active material. For the amount of the layered oxide active material in the first positive electrode slurry, reference may also be made to the prior art. For example, in some embodiments, a mass percentage of the layered oxide active material in the first active layer is 95% to 98.8%.

The layered oxide active material used in this application can be a conventional layered oxide used for positive electrode materials in the field. To avoid an excessively high alkalinity of the layered oxide active material, in some embodiments, a mixed slurry with a mass percentage of 10% formed by mixing the layered oxide active material with water has a pH value between 11 and 13, for example, a conventional binary layered oxide, a conventional ternary positive electrode material, or a conventional quaternary positive electrode material like lithium cobalt oxide, lithium manganate, or lithium nickel oxide. In some embodiments, the layered oxide active material includes a ternary positive electrode material and/or a quaternary positive electrode material; and optionally, the layered oxide active material includes one or more selected from a group of lithium nickel cobalt manganese oxide positive electrode active material, lithium nickel cobalt aluminate positive electrode active material, lithium nickel cobalt manganese aluminate positive electrode active material, doped or coated lithium nickel cobalt manganese oxide positive electrode active material, doped or coated lithium nickel cobalt aluminate positive electrode active material, and doped or coated lithium nickel cobalt manganese aluminate positive electrode active material.

In some embodiments, the layered oxide active material includes element Li, a transition metal element, and optional element Al, where the transition metal elements include any one or more from a group of Ni, Co, Mn, Zn, Cu, Cr, Mg, Fe, V, Ti, Sr, Sb, Y, W, and Nb.

In some embodiments, a surface of the layered oxide active material has a first coating layer, where the first coating layer includes one or more coating layers of carbon, conductive graphene, conductive polymer material, or oxide, to further enhance the conductivity of the layered oxide active material, increase the speed of lithium-ion migration, and improve the rate performance of the battery. The conductive polymer material includes, but is not limited to, any one or more of modified or unmodified polypyrrole (PPy), modified or unmodified poly(3,4-ethylenedioxythiophene) (PEDOT), and modified or unmodified polyamide (PI). The oxide includes, but is not limited to, any one or more of Li₂ZrO₃, LiNbO₃, Li₄Ti₅O₁₂, Li₂TiO₃, Li₃VO₄, LiSnO₃, Li₂SiO₃, and LiAlO₂. The layered oxides are either layered oxides known in the prior art or are prepared using preparation methods known in the prior art, which are not further described in this application.

In some embodiments, a mixed slurry with a mass percentage of 10% formed by mixing the second positive electrode active material with water has a pH value between 8 and 10; and optionally, the second positive electrode active material is a phosphate-based positive electrode active material. For the amount of the phosphate-based positive electrode active material in the second active layer, reference may also be made to the prior art. For example, in some embodiments, a mass percentage of the phosphate-based positive electrode active material in the second active layer is 95% to 98.8%.

In some embodiments, a mixed slurry with a mass percentage of 10% formed by mixing the phosphate-based positive electrode active material with water has a pH value between 8 and 10, effectively mitigating the issue of slurry gelation caused by excessive alkalinity of the phosphate-based positive electrode active material. The pH value testing method is consistent with that described for the layered oxide active material.

Optionally, the phosphate-based positive electrode active material includes at least one of the following materials: LiMn_{1-yF}e_{y}PO₄, where y is any value in a range of 0.001 to 0.5; Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B, S, Si, and N; and Li_{1+w}AₘMn₁₋ᵤEᵤP₁₋ₐRₐO₄₋ₙDₙ, where A includes one or more elements selected from Zn, Al, Na, K, Mg, Nb, Mo, and W, E includes one or more elements selected from Zn, Al, Na, K, Mg, Mo, W, Ti, V, Zr, Fe, Ni, Co, Ga, Sn, Sb, Nb, and Ge, R includes one or more elements selected from B, S, Si, and N, D includes one or more elements selected from S, F, Cl, and Br, w is any value in a range of -0.100 to 0.100, m is any value in a range of 0.001 to 0.1, u is any value in a range of 0.001 to 0.500, a is any value in a range of 0.001 to 0.100, n is any value in a range of 0.001 to 0.1, and Li_{1+w}AₘMn₁₋ᵤEᵤP₁₋ₐRₐO₄₋ₙDₙ is electrically neutral. Doping enhances the cycling performance or rate performance of the material.

Element A doped at the manganese site of lithium manganese phosphate helps reduce the lattice change rate during lithium intercalation and deintercalation, enhancing the structural stability of the lithium manganese phosphate positive electrode material, significantly reducing manganese dissolution, and lowering the oxygen activity on the particle surface. Element R doped at the phosphorus site helps adjust the ease of Mn-O bond length variation, thereby lowering the lithium-ion migration barrier, promoting lithium-ion migration, and improving the rate performance of the secondary battery.

Doping at the P site and O site also affects Mn dissolution in antisite defects and kinetic performance. Therefore, doping reduces the antisite defect concentration in the material, improves the kinetic performance and gram capacity of the material, and also changes the morphology of particles, thereby increasing the compacted density. In summary, doping specific elements in specific amounts at the Li, Mn, P, and O sites of the compound LiMnPO₄ can achieve significantly improved rate performance, significantly reduce the dissolution of Mn and Mn-site doping elements, obtain significantly improved cycling performance and/or high-temperature stability, and also enhance the gravimetric capacity and compacted density of the material.

M in the positive electrode material LiMPO₄ designed in this solution may include element Mn and element Fe. In a possible embodiment, LiMPO₄ may be a compound LiMn_{1-y}Fe_{y}PO₄.

For example, the preparation method of the compound LiMn_{0.50}Fe_{0.50}PO₄ includes the following steps.

Step S1: Prepare Fe-doped manganese oxalate.

574.7 g of manganese carbonate and 579.3 g of ferrous carbonate are added to a mixer and thoroughly mixed for 6 hours. The resulting mixture is then transferred to a reactor, and 5 L of deionized water and 1260.6 g of oxalic acid dihydrate are added, followed by heating to 80°C. Thorough stirring was performed at 500 rpm for 6 hours until the reaction terminates with no bubbles generated, to yield a Fe-doped manganese oxalate suspension. The suspension is filtered, dried at 120°C, and then sand-milled to obtain manganese iron oxalate particles with a particle size of 100 nm.

Step S2: Prepare LiMn_{0.50}Fe_{0.50}PO₄.

1791.4 g of the manganese iron oxalate prepared in Step S1 (calculated with C₂O₄Mn_{0.50}Fe_{0.50}•2H₂O), 369.4 g of lithium carbonate, and 1150.1 g of ammonium dihydrogen phosphate are added to 20 L of deionized water, thoroughly stirred, and mixed to uniformity at 80°C for 10 hours to obtain a slurry. The slurry is transferred to spray drying equipment for spray drying and granulation at 250°C to obtain powder. In a protective atmosphere (90% nitrogen and 10% hydrogen), the powder is sintered in a roller kiln at 700°C for 4 hours.

The positive electrode active material may be a compound with a chemical formula Li₁₊ₜMn_{1-c}Fe_{c}P_{1-z}R_{z}O₄, where t is any value in a range of -0.100 to 0.100, c is any value in a range of 0.001 to 0.500, z is any value in a range of 0.001 to 0.100, and R includes one or more elements selected from B (boron), S, Si, and N. The values of t, c, and z satisfy the condition of keeping the entire compound electrically neutral. A ratio of c to 1-c is 1:10 to 1:1, optionally 1:4 to 1:1. Herein, c represents a sum of the stoichiometric numbers of the doping element Fe at the Mn sites. In some embodiments, a ratio of z to 1-z is 1:9 to 1:999, optionally 1:499 to 1:249. Herein, z represents a sum of the stoichiometric numbers of the doping element R at the P sites.

The preparation method of the compound Li₁₊ₜMn_{1-c}Fe_{c}P_{1-z}R_{z}O₄ may include the following steps.
(1) A manganese source, an iron source, and an acid are dissolved in a solvent and stirred to generate a suspension of manganese salt doped with element Fe, the suspension is filtered, and the filter cake is dried to obtain a manganese salt doped with element Fe. (2) A lithium source, a phosphorus source, a source of element R, a solvent, and the manganese salt doped with element Fe obtained from step (1) are added to a reaction vessel, ground and mixed to obtain a slurry. (3) The slurry obtained from step (2) is transferred to spray drying equipment for spray drying and granulation to obtain particles. (4) The particles obtained from step (3) are sintered to obtain the positive electrode active material.

In any embodiment, the manganese source may be a manganese-containing substance known in the art for preparing lithium manganese phosphate. For example, a manganese source may be selected from one or a combination of elemental manganese, manganese dioxide, manganese phosphate, manganese oxalate, and manganese carbonate. The iron source is selected from at least one of elemental iron, oxide, phosphate, oxalate, carbonate, or sulfate. The acid is selected from one or more of hydrochloric acid, sulfuric acid, nitric acid, phosphoric acid, and organic acid such as oxalic acid, for example, may be oxalic acid. The source of element R is selected from at least one of sulfate, borate, nitrate, or silicate of element R.

For example, the preparation method of the compound Li_{1.001}Mn_{0.999}Fe_{0.001}P_{0.999}Si_{0.001}O₄ includes the following steps.

Step S1: Prepare Fe-doped manganese oxalate.

1148.2 g of manganese carbonate and 1.2 g of ferrous carbonate are added to a mixer and thoroughly mixed for 6 hours. The resulting mixture is then transferred to a reactor, and 5 L of deionized water and 1260.6 g of oxalic acid dihydrate are added, followed by heating to 80°C. Thorough stirring is performed at 500 rpm for 6 hours until the reaction terminates with no bubbles generated, to yield a Fe-doped manganese oxalate suspension. The suspension is filtered, dried at 120°C, and subjected to sand milling to obtain manganese iron oxalate particles with a particle size of 100 nm.

Step S2: Prepare Li_{1.001}Mn_{0.999}Fe_{0.001}P_{0.999}Si_{0.001}O₄.

1789.6 g of the manganese iron oxalate prepared in Step S1 (calculated with C₂O₄Mn_{0.999}Fe_{0.001}•2H₂O), 369.8 g of lithium carbonate, 1148.9 g of ammonium dihydrogen phosphate, and 0.8 g of silicic acid are added to 20 L of deionized water, thoroughly stirred, and mixed to uniformity at 80°C for 10 hours to obtain a slurry. The slurry is transferred to spray drying equipment for spray drying and granulation at 250°C to obtain powder. In a protective atmosphere (90% nitrogen and 10% hydrogen), the powder is sintered in a roller kiln at 700°C for 4 hours.

In some embodiments, the positive electrode active material may be a compound with a chemical formula Li_{1+w}CₘMn₁₋ᵤFeᵤP₁₋ₐRₐO₄₋ₙDₙ, where C includes one or more elements selected from Zn, Al, Na, K, Mg, Nb, Mo, and W, R includes one or more elements selected from B (boron), S, Si, and N, D includes one or more elements selected from S, F, Cl, and Br, w is any value in a range of -0.100 to 0.100, u is any value in a range of 0.001 to 0.500, a is any value in a range of 0.001 to 0.100, n is any value in a range of 0.001 to 0.1, and m is any value in a range of 0.9 to 1.1. Similarly, the values of w, u, a, and m satisfy the condition of keeping the entire compound electrically neutral.

The preparation method of the compound Li_{1+w}AₘMn₁₋ᵤEᵤP₁₋ₐRₐO₄₋ₙDₙ may include the following steps.
(1) A manganese source, an iron source, and an acid are dissolved in a solvent and stirred to generate a suspension of manganese salt doped with element E, the suspension is filtered, and the filter cake is dried to obtain a manganese salt doped with element E. (2) A lithium source, a phosphorus source, a source of element A, a source of element R, a source of element D, a solvent, and the manganese salt doped with element E obtained from step (1) are added to a reaction vessel, ground and mixed to obtain a slurry. (3) The slurry obtained from step (2) is transferred to spray drying equipment for spray drying and granulation to obtain particles, (4) The particles obtained from step (3) are sintered to obtain the positive electrode active material.

In any embodiment, the source of element A is selected from at least one of elemental A, oxides, phosphates, oxalates, carbonates, and sulfates, the manganese source may be a manganese-containing substance known in the art for preparing lithium manganese phosphate, such as a manganese source selected from one or a combination of elemental manganese, manganese dioxide, manganese phosphate, manganese oxalate, and manganese carbonate. The iron source is selected from at least one of elemental iron, oxide, phosphate, oxalate, carbonate, or sulfate. The acid is selected from one or more of hydrochloric acid, sulfuric acid, nitric acid, phosphoric acid, and organic acid such as oxalic acid, for example, may be oxalic acid. The source of element R is selected from at least one of sulfate, borate, nitrate, or silicate of element R, and the source of element D is selected from at least one of elemental D or ammonium salt.

For an embodiment that the positive electrode active material may contain Li_{1+w}AₘMn₁₋ᵤEᵤP₁₋ₐRₐO₄₋ₙDₙ, the value of w is influenced by the valence states of E and R and the values of y and z, to ensure the entire system remains electrically neutral. If the value of w is too small, the lithium content of the entire system decreases, affecting the gram capacity of the material. The value of u limits the total amount of all doping elements. If the value of u is too small, meaning the doping amount is too low, the doping elements have no effect; and if the value of u exceeds 0.5, the Mn content in the system is low, affecting the voltage plateau of the material. The R element is doped at the P site. Since the P-O tetrahedron is relatively stable, but an excessively large value of a affects the stability of the material, the value of a is limited to 0.001 to 0.100. More specifically, w is any value in a range of -0.100 to 0.100, m is any value in a range of 0.001 to 0.1, u is any value in a range of 0.001 to 0.500, a is any value in a range of 0.001 to 0.100, and n is any value in a range of 0.001 to 0.1. For example, 1+w is selected from the range of 0.9 to 1.1, such as 0.97, 0.977, 0.984, 0.988, 0.99, 0.991, 0.992, 0.993, 0.994, 0.995, 0.996, 0.997, 0.998, 1.01; m is selected from the range of 0.001 to 0.1, such as 0.001, 0.005; u is selected from the range of 0.001 to 0.5, such as 0.001, 0.005, 0.02, 0.05, 0.1, 0.15, 0.2, 0.25, 0.3, 0.34, 0.345, 0.349, 0.35, 0.4; a is selected from the range of 0.001 to 0.1, such as 0.001, 0.005, 0.08, 0.1; n is selected from the range of 0.001 to 0.1, such as 0.001, 0.005, 0.08, 0.1; and the positive electrode active material is electrically neutral.

Unless otherwise specified, in the above chemical formulas, when a doping site has two or more elements, the limitations on the numerical ranges of w, u, a, m, or n apply not only to the stoichiometric number of each element at that site but also to the sum of the stoichiometric numbers of all elements at that site. For example, for a compound with the chemical formula Li₁₊ₜMn_{1-c}Fe_{c}P_{1-z}R_{z}O₄, when R consists of two or more elements R1, R2, ..., Rn, the stoichiometric numbers z1, z2, ..., zn of R1, R2, ..., Rn all fall within the numerical range defined for z in this application, and the sum of z1, z2, ..., zn also falls within that numerical range. Similarly, for a case that A consists of two or more elements, the numerical range limitations for the stoichiometric number of A in this application have the same meaning as described above.

In some embodiments, optionally, the phosphate-based positive electrode active material further includes a coating layer, and the coating layer may optionally be one or more layers of pyrophosphate, phosphate, or carbon. Since the migration barrier of transition metals in pyrophosphate is relatively high (>1 eV), the dissolution of transition metals can be effectively suppressed. Phosphate has excellent lithium-ion conductivity, thereby reducing the lithium impurity content on the surface. The carbon layer can effectively improvs the conductivity and desolvation ability of LiMnPO₄, and can also act as a "barrier" to further hinder manganese ion migration into the electrolyte, and reduces corrosion of the active material by the electrolyte. Additionally, the carbon layer in the mixture can also optimize the conductive network around the ternary positive electrode material, enhancing the mixing uniformity of the phosphate-based positive electrode material and the ternary positive electrode material.

In an example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil is used as the metal foil. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on the polymer material matrix (such as a matrix of polypropylene (PP), polyethylene terephthalate (PET), polybutylene terephthalate (PBT), polystyrene (PS), or polyethylene (PE)).

The following description of the positive electrode film layer is a description for a positive electrode film layer on either side of the current collector. If the current collector have positive electrode film layers on two sides, the two positive electrode film layers are designed independently.

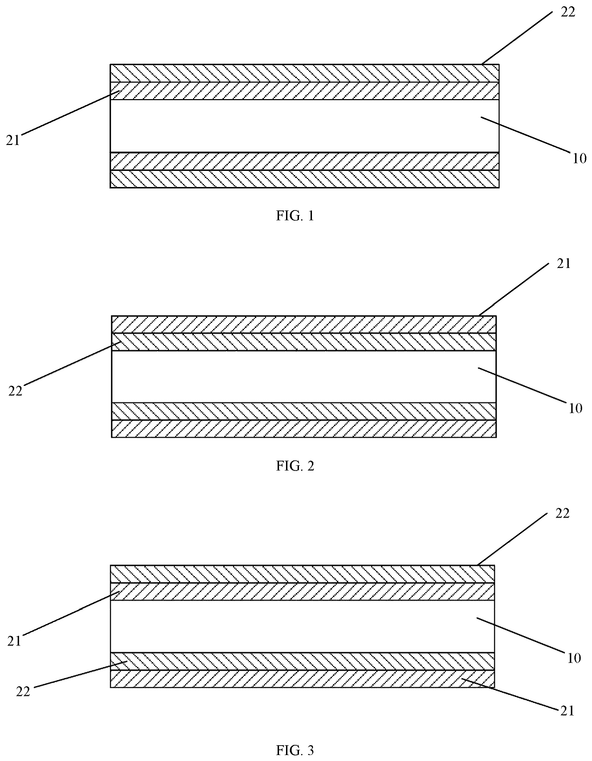

In some embodiments, as shown in FIGs. 1 to 6, the positive electrode film layer includes one or more first active layers 21 and one or more second active layers 22 arranged along a thickness direction of the positive electrode current collector 10, the first active layers 21 and the second active layers 22 being alternately stacked. Each first active layer 21 is independently formed by applying and drying a first positive electrode slurry, and each second active layer 22 is independently formed by applying and drying a second positive electrode slurry. The first active layer 21 in the positive electrode film layer may be an active layer closest to the positive electrode current collector 10 in the positive electrode film layer, or the second active layer 22 may be an active layer closest to the positive electrode current collector 10 in the positive electrode film layer.

In some embodiments, one first active layer 21 and one second active layer 22 are provided in the positive electrode film layer. Referring to FIGs. 1 to 3, in FIG. 1, the first active layer 21 and the second active layer 22 in the positive electrode film layers on both sides of the positive electrode current collector 10 are arranged sequentially away from the positive electrode current collector 10; in FIG. 2, the second active layer 22 and the first active layer 21 in the positive electrode film layers on both sides of the positive electrode current collector 10 are arranged sequentially away from the positive electrode current collector 10; in FIG. 3, the first active layer 21 and the second active layer 22 in the positive electrode film layer on one side of the positive electrode current collector 10 are arranged sequentially away from the positive electrode current collector 10, while the second active layer 22 and the first active layer 21 in the positive electrode film layer on the other side are arranged sequentially away from the positive electrode current collector 10.

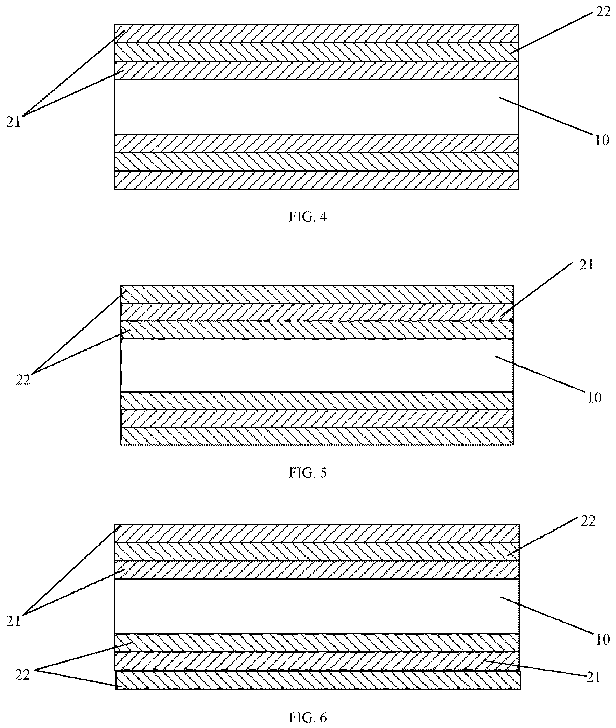

In some embodiments, one first active layer 21 and two second active layers 22 are provided, with the first active layer 21 disposed between the two second active layers 22; and/or two first active layers 21 and one second active layer 22 are provided, with the second active layer 22 disposed between the two first active layers 21. Referring to FIGs. 4 to 6, in FIG. 4, the second active layer 22, the first active layer 21, and the second active layer 22 in the positive electrode film layers on both sides of the positive electrode current collector 10 are arranged sequentially away from the positive electrode current collector 10; in FIG. 5, the first active layer 21, the second active layer 22, and the first active layer 21 in the positive electrode film layers on both sides of the positive electrode current collector 10 are arranged sequentially away from the positive electrode current collector 10; in FIG. 6, the second active layer 22, the first active layer 21, and the second active layer 22 in the positive electrode film layer on one side of the positive electrode current collector 10 are arranged sequentially away from the positive electrode current collector 10, while the first active layer 21, the second active layer 22, and the first active layer 21 in the positive electrode film layer on the other side are arranged sequentially away from the positive electrode current collector 10.

Additionally, the positive electrode film layer on either side in FIGs. 1 to 3 may be combined with the positive electrode film layer on the opposite side in FIGs. 4 to 6 to form the positive electrode film layers on both sides of the positive electrode current collector 10.

The positive electrode film layers with different structures can be prepared by adjusting the coating sequence of the first positive electrode slurry and the second positive electrode slurry, followed by processes such as drying and cold pressing, to obtain the positive electrode plate. In an example, the organic solvent used to prepare the first positive electrode slurry and the second positive electrode slurry may include one or more of N-methylpyrrolidone, N,N-dimethylformamide, and dimethyl sulfoxide.

The active layer containing the layered oxide active material in the positive electrode film layers has significantly improved film layer uniformity and peel strength than that using a same content of PVDF homopolymer.

For the thickness of the positive electrode film layer in the positive electrode plate of this application, reference may be made to the prior art. In some embodiments, a ratio of a thickness of the first active layer to a thickness of the second active layer is 0.9:1 to 1.1:1; and optionally, the thickness of the first active layer is 60 µm to 65 µm, and the thickness of the second active layer is 60 µm to 65 µm. The proportion of the two active materials can be adjusted by adjusting the thicknesses of the first active layer and the second active layer within this range, thereby tuning the performance of the battery cell.

### [Negative electrode plate]

The negative electrode plate includes a negative electrode current collector and a negative electrode film layer disposed on at least one surface of the negative electrode current collector, where the negative electrode film layer includes a negative electrode active material.

In an example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material matrix (such as a matrix of polypropylene (PP), polyethylene terephthalate (PET), polybutylene terephthalate (PBT), polystyrene (PS), or polyethylene (PE)).

In some embodiments, the negative electrode active material may be a negative electrode active material for batteries known in the art. In an example, the negative electrode active material may include at least one of the following materials: artificial graphite, natural graphite, soft carbon, hard carbon, silicon-based material, tin-based material, or lithium titanate. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, this application is not limited to these materials, and other conventional materials that can be used as negative electrode active materials for batteries may be used instead. These negative electrode active materials may be used alone or in combination of two or more.

In some embodiments, the negative electrode film layer may optionally include a binder. In an example, the binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer may optionally include a conductive agent. In an example, the conductive agent may be selected from at least one of superconducting carbon, acetylene black, carbon black, Ketjen black, carbon dots, carbon nanotubes, graphene, or carbon nanofibers.

In some embodiments, the negative electrode film layer may optionally include other additives, such as a thickener (for example, sodium carboxymethyl cellulose (CMC-Na)).

In some embodiments, the negative electrode plate may be prepared as follows: The constituents used for preparing the negative electrode plate, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing, to obtain the negative electrode plate.

### [Electrolyte]

The electrolyte conducts ions between the positive electrode plate and the negative electrode plate. The type of electrolyte is not specifically limited in this application and may be selected based on needs. For example, the electrolyte may be in liquid state, gel state, or all-solid state.

In some embodiments, the electrolyte is in liquid state and includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, or diethyl sulfone.

In some embodiments, the electrolyte further optionally includes an additive. In an example, the additive may include a negative electrode film-forming additive, a positive electrode film-forming additive, and an additive capable of improving certain battery performance, such as an additive for improving overcharge protection performance or an additive for improving high-temperature performance or low-temperature performance of the battery.

### [Separator]

In some embodiments, the secondary battery further includes a separator. This application imposes no particular restrictions on a type of the separator, and any known porous structure separator with good chemical and mechanical stability may be used.

In some embodiments, a material of the separator may be selected from at least one of glass fiber, nonwoven fabric, polyethylene, polypropylene, or polyvinylidene fluoride. The separator may be a single-layer film or a multi-layer composite film, which is not particularly limited. When the separator is a multi-layer composite film, materials of all layers may be the same or different, which is not particularly limited.

In some embodiments, the positive electrode plate, the negative electrode plate, and the separator may be made into an electrode assembly through winding or lamination.

In some embodiments, the secondary battery may include an outer package. The outer package may be used to package the electrode assembly and the electrolyte.

In some embodiments, the outer package of the secondary battery may be a hard shell, such as a hard plastic shell, an aluminum shell, or a steel shell. The outer package of the secondary battery may alternatively be a soft package, such as a pouch bag. A material of the soft package may be plastic, such as polypropylene, polybutylene terephthalate, or polybutylene succinate.

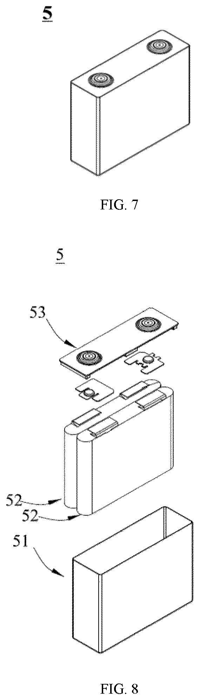

This application imposes no particular restrictions on a shape of the secondary battery, which may be cylindrical, prismatic, or any other shape. For example, FIG. 7 shows a secondary battery 5 with a prismatic structure as an example.

In some embodiments, referring to FIG. 8, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 covers the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. One or more electrode assemblies 52 may be contained in the secondary battery 5, and the specific quantity may be selected by those skilled in the art based on specific practical requirements.

In some embodiments, the secondary battery may be assembled into a battery module. One or more secondary batteries may be contained in the battery module, and the specific quantity may be selected by those skilled in the art based on the application and capacity of the battery module.

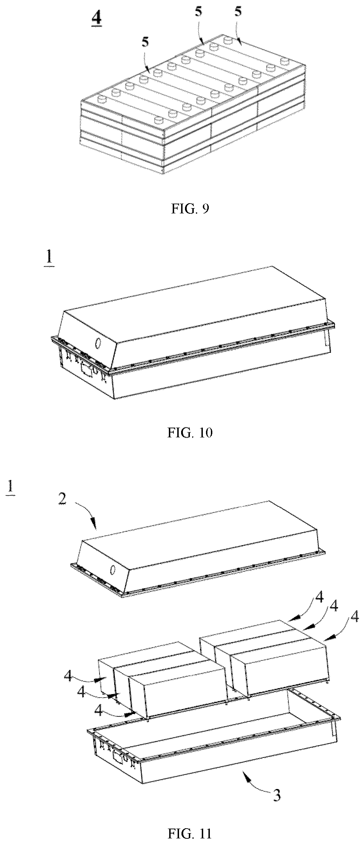

FIG. 9 shows a battery module 4 as an example. Referring to FIG. 9, in the battery module 4, multiple secondary batteries 5 may be sequentially arranged along a length direction of the battery module 4, and certainly, may alternatively be arranged in any other manner. Further, the multiple secondary batteries 5 are fixed by fasteners.

Optionally, the battery module 4 may further include a housing having an accommodating space, and the multiple secondary batteries 5 are accommodated in the accommodating space.

In some embodiments, the battery module may be further assembled into a battery pack. One or more battery modules may be contained in the battery pack, and the specific quantity may be selected by those skilled in the art based on the application and capacity of the battery pack.

FIG. 10 and FIG. 11 show a battery pack 1 as an example. Referring to FIG. 10 and FIG. 11, the battery pack 1 may include a battery box and multiple battery modules 4 disposed in the battery box. The battery box includes an upper box body 2 and a lower box body 3. The upper box body 2 is capable of covering the lower box body 3 to form a closed space for accommodating the battery modules 4. The multiple battery modules 4 may be arranged in the battery box in any manner.

Additionally, this application further provides an electric apparatus. The electric apparatus includes at least one of the secondary battery provided in this application, a battery module, or a battery pack. The secondary battery, the battery module, or the battery pack may serve as a power source or an energy storage unit for the electric apparatus. The electric apparatus may include a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf cart, or an electric truck), an electric train, ship, or satellite, or an energy storage system, but is not limited thereto.

The electric apparatus may use the secondary battery, the battery module, or the battery pack based on use requirements of the electric apparatus.

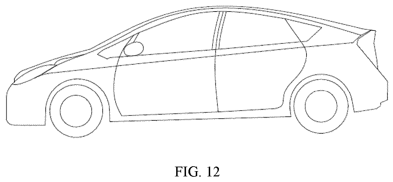

FIG. 12 shows an electric apparatus as an example. The electric apparatus is a battery electric vehicle, a hybrid electric vehicle, or a plug-in hybrid electric vehicle. To meet the demand for high power and high energy density of the secondary battery in the electric apparatus, a battery pack or a battery module may be used.

### [Examples]

The following describes examples of this application. The examples described below are exemplary, intended solely to explain this application, and cannot be construed as limiting this application. For examples where specific techniques or conditions are not specified, the techniques or conditions described in the literature in the field or according to product instructions are followed. The reagents or instruments used are conventional products commercially available if no manufacturer is indicated.

The sources and compositions of the PVDF copolymers or PVDF homopolymers used in the following examples are shown in Table 1 below.

**Table 1**

| Number | Substance | Molar percentage of structural units corresponding to vinylidene fluoride monomer (%) |
|---|---|---|
| PVDF-1 | Vinylidene fluoride-hexafluoropropylene copolymer | 75 |
| PVDF-2 | Vinylidene fluoride-hexafluoropropylene copolymer | 50 |
| PVDF-3 | Vinylidene fluoride-hexafluoropropylene copolymer | 95 |
| PVDF-4 | Vinylidene fluoride-hexafluoropropylene copolymer | 40 |
| PVDF-5 | Vinylidene fluoride-ethylene oxide copolymer | 68 |
| PVDF-6 | Vinylidene fluoride-trichloroethylene copolymer | 81 |
| PVDF-7 | Tetrafluoroethylene-hexafluoropropylene copolymer | 0 (with a percentage of structural units corresponding to tetrafluoroethylene monomer being 50%) |
| PVDF-8 | Polyvinylidene fluoride | Homopolymer (with a weight-average molecular weight of 1,000,000) |

### Positive electrode slurry composition:

First positive electrode slurry A: LiNi_{0.8}Co_{0.1}Mn_{0.1}O₂ (a mixed slurry with a mass percentage of 10% formed by mixing LiNi_{0.8}Co_{0.1}Mn_{0.1}O₂ with water having a pH value of approximately 12.4), binder PVDF-1, and conductive agent Super P conductive carbon black were mixed in a mass ratio of 97.0wt%:1.5wt%:1.5wt% to produce a first mixed material. The first mixed material was dispersed in N-methylpyrrolidone to prepare the first positive electrode slurry A, where the mass-to-volume ratio of the first mixed material to N-methylpyrrolidone was 3:1.

First positive electrode slurry B: PVDF-2 was used to replace PVDF-1 in the first positive electrode slurry A as the binder, while all other components and procedures remained identical to the first positive electrode slurry A, to prepare the first positive electrode slurry B.

First positive electrode slurry C: PVDF-3 was used to replace PVDF-1 in the first positive electrode slurry A as the binder, while all other components and procedures remained identical to the first positive electrode slurry A, to prepare the first positive electrode slurry C.

First positive electrode slurry D: PVDF-4 was used to replace PVDF-1 in the first positive electrode slurry A as the binder, while all other components and procedures remained identical to the first positive electrode slurry A, to prepare the first positive electrode slurry D.

First positive electrode slurry E: PVDF-5 was used to replace PVDF-1 in the first positive electrode slurry A as the binder, while all other components and procedures remained identical to the first positive electrode slurry A, to prepare the first positive electrode slurry E.

First positive electrode slurry F: PVDF-6 was used to replace the PVDF copolymer in the first positive electrode slurry A as the binder, while all other components and procedures remained identical to the first positive electrode slurry A, to prepare the first positive electrode slurry F.

First positive electrode slurry G: LiNi_{0.8}Co₀₁Mn_{0.1}O₂, binder PVDF-1, and conductive agent Super P conductive carbon black were mixed in a mass ratio of 98.0wt%:0.5wt%: 1.5wt% to produce a first mixed material. The first mixed material was dispersed in N-methylpyrrolidone to prepare the first positive electrode slurry G.

First positive electrode slurry H: LiNi_{0.8}Co_{0.1}Mn_{0.1}O₂, binder PVDF-1, and conductive agent Super P conductive carbon black were mixed in a mass ratio of 96.0wt%:2.5wt%:1.5wt% to produce a first mixed material. The first mixed material was dispersed in N-methylpyrrolidone to prepare the first positive electrode slurry H.

First positive electrode slurry I: PVDF-7 from Table 1 was used to replace PVDF-1 in the first positive electrode slurry A as the binder, while all other components and procedures remained identical to the first positive electrode slurry A, to prepare the first positive electrode slurry I.

First positive electrode slurry J: LiNi_{0.65}Co_{0.07}Mn_{0.28}O₂ (a mixed slurry with a mass percentage of 10% formed by mixing LiN_{0.65}Co_{0.07}Mn_{0.28}O₂ with water having a pH value of approximately 11.2) was used to replace LiNi_{0.8}Co_{0.1}Mn_{0.1}O₂ in the first positive electrode slurry A as the active material, while all other components and procedures remained identical to the first positive electrode slurry A, to prepare the first positive electrode slurry J.

First positive electrode slurry K: LiAl_{0.05}Ni_{0.75}Co_{0.1}Mn_{0.1}O₂ (a mixed slurry with a mass percentage of 10% formed by mixing LiAl_{0.05}Ni_{0.75}Co_{0.1}Mn_{0.1}O₂ with water having a pH value of approximately 12.8) was used to replace LiNi_{0.8}Co_{0.1}Mn_{0.1}O₂ in the first positive electrode slurry A as the active material, while all other components and procedures remained identical to the first positive electrode slurry A, to prepare the first positive electrode slurry K.

First positive electrode slurry L: PVDF-8 was used to replace the PVDF copolymer in the first positive electrode slurry A as the binder, while all other components and procedures remained identical to the first positive electrode slurry A, to prepare the first positive electrode slurry L.

Second positive electrode slurry A: LiMn_{0.5}Fe_{0.5}PO₄ (a mixed slurry with a mass percentage of 10% formed by mixing LiMn_{0.5}Fe_{0.5}PO₄ with water having a pH value of approximately 9.6), binder homopolymer PVDF-8, and conductive agent Super P conductive carbon black were mixed in a mass ratio of 97.0wt%:1.5wt%:1.5wt% to produce a second mixed material. The second mixed material was dispersed in N-methylpyrrolidone to prepare the second positive electrode slurry A, where the mass-to-volume ratio of the second mixture to N-methylpyrrolidone was 3:1.

Second positive electrode slurry B: LiMn_{0.5}Fe_{0.5}PO₄, binder PVDF-1, and conductive agent Super P conductive carbon black were mixed in a mass ratio of 97.0wt%:1.5wt%:1.5wt% to produce a second mixed material. The second mixed material was dispersed in N-methylpyrrolidone to prepare the second positive electrode slurry B.

The testing method for the positive electrode materials used was as follows: 5 g of sample powder was weighed into a conical flask, 45 g of deionized water was added to the flask in a 1:9 powder-to-solvent ratio, a magnetic stirrer was inserted, and the flask was sealed with a sealing film. The prepared solution was placed in the center of a magnetic stirrer platform, stirred for 30 minutes, left standing for 1.5 hours after stirring, and the pH value was measured by fully immersing the pH electrode glass bulb in the solution, with the pH reading stabilized for at least 1 minute.

Filtration performance and viscosity tests were conducted on the above slurries using the following methods: Filtration performance test: 300 mL of slurry was poured into a beaker with a 100-mesh filter, and the time taken for the slurry to completely pass through the filter was recorded.

Viscosity test method: The slurry was left standing for 48 hours, placed into a beaker, and measured using an NDJ-79 rotary viscometer.

The test results are recorded in Table 2.

**Table 2**

| | Filtration performance (s) | Viscosity of slurry after standing for 48h (MPa·s) |
|---|---|---|
| First positive electrode slurry A | 15 | 11000 |
| First positive electrode slurry B | 30 | 16000 |
| First positive electrode slurry C | 80 | 20000 |
| First positive electrode slurry D | 10 | 9500 |
| First positive electrode slurry E | 20 | 10000 |
| First positive electrode slurry F | 30 | 13500 |
| First positive electrode slurry G | 10 | 9000 |
| First positive electrode slurry H | 34 | 14000 |
| First positive electrode slurry I | 35 | 12500 |
| First positive electrode slurry J | 13 | 10300 |
| First positive electrode slurry K | 20 | 10500 |
| First positive electrode slurry L | 160 | 25000 |
| Second positive electrode slurry A | 17 | 10500 |
| Second positive electrode slurry B | 50 | 15000 |

From the table above, it can be seen that for different types of positive electrode materials, after different types of PVDF are used to produce slurries, significant differences exist in the slurry filtration performance and their state after standing for 48 hours. The NCM material with PVDF copolymers shows optimal filtration performance; for example, filtering 300 mL of the first positive electrode slurry A takes only 15 seconds, and the slurry has low viscosity after standing for 48 hours, with no gelation observed. In contrast, the NCM material with PVDF homopolymers has poor filtration performance; filtering the same 300 mL of the first positive electrode slurry L takes 160 seconds, which is 10 times longer than the slurry prepared with PVDF copolymers; and after standing for 48 hours, the slurry exhibits significantly higher viscosity, severe gelation, difficult filtration, and severely deteriorated fluidity. The LFMP material with PVDF homopolymers has filtration performance and viscosity after standing for 48 hours similar to those of the NCM with PVDF copolymers, indicating that PVDF homopolymers are the suitable PVDF type for LFMP materials. If LFMP material is paired with PVDF copolymers, the filtration performance and viscosity after standing for 48 hours increase compared to pairing with PVDF homopolymers, and the slurry state slightly deteriorates, with slight gelation observed.

### Example 1

### Positive electrode plate:

The first positive electrode slurry A was applied to both surfaces of the aluminum foil to form the first coating, and the second positive electrode slurry A was applied to the surface of the first coating to form the second coating, followed by drying, to obtain the positive electrode plate Q1. In the active material layer of the positive electrode plate Q1, the mass proportions of lithium nickel cobalt manganese oxide and lithium manganese iron phosphate were each 50%, the average thickness of the first coating was 60 µm, and the average thickness of the second coating was 60 µm.

Negative electrode plate: The negative electrode active material graphite, conductive agent Super P conductive carbon black, and binder styrene-butadiene rubber (SBR) were dissolved in solvent deionized water in a weight ratio of 92:4:4, followed by thorough mixing, to prepare the negative electrode slurry. The negative electrode slurry was evenly applied once or multiple times to the copper foil negative electrode current collector, followed by drying, cold pressing, and slitting, to obtain the negative electrode plate.

### Separator: A PE film with a ceramic coating was used.

Electrolyte: Lithium hexafluorophosphate LiPF₆ was used as the electrolyte with a content of 10% in the electrolyte, and a mixture of EC+PC (ethylene carbonate + propylene carbonate) in a volume ratio of 3:7 was used as the solvent.

The positive electrode plate Q1, the negative electrode plate, and the separator were assembled as the bare cell. After insulation coating, the bare cell was encased in an aluminum shell, with the top cover welded, to obtain the dry cell. The dry cell was baked, injected with electrolyte, and subjected to formation and aging, to obtain the hard-shell battery X1.

### Example 2

Positive electrode plate: The first positive electrode slurry B was applied to both surfaces of the aluminum foil to form the first coating, and the second positive electrode slurry A was applied to the surface of the first coating to obtain the positive electrode plate Q2. In the active material layer of the positive electrode plate Q2, the mass proportions of lithium nickel cobalt manganese oxide and lithium manganese iron phosphate were each 50%.

With the negative electrode plate, separator, and electrolyte composition identical to those in Example 1, the hard-shell battery X2 was obtained.

### Example 3

Positive electrode plate: The first positive electrode slurry C was applied to both surfaces of the aluminum foil to form the first coating, and the second positive electrode slurry A was applied to the surface of the first coating to obtain the positive electrode plate Q3. In the active material layer of the positive electrode plate Q3, the mass proportions of lithium nickel cobalt manganese oxide and lithium manganese iron phosphate were each 50%.

With the negative electrode plate, separator, and electrolyte composition identical to those in Example 1, the hard-shell battery X3 was obtained.

### Example 4

Positive electrode plate: The first positive electrode slurry D was applied to both surfaces of the aluminum foil to form the first coating, and the second positive electrode slurry A was applied to the surface of the first coating to obtain the positive electrode plate Q4. In the active material layer of the positive electrode plate Q4, the mass proportions of lithium nickel cobalt manganese oxide and lithium manganese iron phosphate were each 50%.

With the negative electrode plate, separator, and electrolyte composition identical to those in Example 1, the hard-shell battery X4 was obtained.

### Example 5

Positive electrode plate: The first positive electrode slurry E was applied to both surfaces of the aluminum foil to form the first coating, and the second positive electrode slurry A was applied to the surface of the first coating to obtain the positive electrode plate Q5. In the active material layer of the positive electrode plate Q5, the mass proportions of lithium nickel cobalt manganese oxide and lithium manganese iron phosphate were each 50%.

With the negative electrode plate, separator, and electrolyte composition identical to those in Example 1, the hard-shell battery X5 was obtained.

### Example 6

Positive electrode plate: The first positive electrode slurry F was applied to both surfaces of the aluminum foil to form the first coating, and the second positive electrode slurry A was applied to the surface of the first coating to obtain the positive electrode plate Q6. In the active material layer of the positive electrode plate Q6, the mass proportions of lithium nickel cobalt manganese oxide and lithium manganese iron phosphate were each 50%.

With the negative electrode plate, separator, and electrolyte composition identical to those in Example 1, the hard-shell battery X6 was obtained.

### Example 7

Positive electrode plate: The first positive electrode slurry G was applied to both surfaces of the aluminum foil to form the first coating, and the second positive electrode slurry A was applied to the surface of the first coating to obtain the positive electrode plate Q7. In the active material layer of the positive electrode plate Q7, the mass proportions of lithium nickel cobalt manganese oxide and lithium manganese iron phosphate were each 50%.

With the negative electrode plate, separator, and electrolyte composition identical to those in Example 1, the hard-shell battery X7 was obtained.

### Example 8

Positive electrode plate: The first positive electrode slurry H was applied to both surfaces of the aluminum foil to form the first coating, and the second positive electrode slurry A was applied to the surface of the first coating to obtain the positive electrode plate Q8. In the active material layer of the positive electrode plate Q8, the mass proportions of lithium nickel cobalt manganese oxide and lithium manganese iron phosphate were each 50%.

With the negative electrode plate, separator, and electrolyte composition identical to those in Example 1, the hard-shell battery X8 was obtained.

### Example 9

Positive electrode plate: The first positive electrode slurry I was applied to both surfaces of the aluminum foil to form the first coating, and the second positive electrode slurry A was applied to the surface of the first coating to obtain the positive electrode plate Q9. In the active material layer of the positive electrode plate Q9, the mass proportions of lithium nickel cobalt manganese oxide and lithium manganese iron phosphate were each 50%.

With the negative electrode plate, separator, and electrolyte composition identical to those in Example 1, the hard-shell battery X9 was obtained.

### Example 10

Positive electrode plate: The first positive electrode slurry J was applied to both surfaces of the aluminum foil to form the first coating, and the second positive electrode slurry A was applied to the surface of the first coating to obtain the positive electrode plate Q10. In the active material layer of the positive electrode plate Q10, the mass proportions of lithium nickel cobalt manganese oxide and lithium manganese iron phosphate were each 50%.

With the negative electrode plate, separator, and electrolyte composition identical to those in Example 1, the hard-shell battery X10 was obtained.

### Example 11

Positive electrode plate: The first positive electrode slurry K was applied to both surfaces of the aluminum foil to form the first coating, and the second positive electrode slurry A was applied to the surface of the first coating to obtain the positive electrode plate Q11. In the active material layer of the positive electrode plate Q11, the mass proportions of lithium nickel cobalt manganese oxide and lithium manganese iron phosphate were each 50%.

With the negative electrode plate, separator, and electrolyte composition identical to those in Example 1, the hard-shell battery X11 was obtained.

### Example 12

Positive electrode plate: The first positive electrode slurry A was applied to both surfaces of the aluminum foil to form the first coating, and the second positive electrode slurry B was applied to the surface of the first coating to obtain the positive electrode plate Q12. In the active material layer of the positive electrode plate Q12, the mass proportions of lithium nickel cobalt manganese oxide and lithium manganese iron phosphate were each 50%.

With the negative electrode plate, separator, and electrolyte composition identical to those in Example 1, the hard-shell battery X12 was obtained.

### Example 13

### Positive electrode plate:

The second positive electrode slurry A was applied to both surfaces of the aluminum foil to form the first coating, and a second coating was formed by coating the first positive electrode slurry A on the surface of the first coating. After drying, the positive electrode plate Q13 was obtained. In the active material layer of the positive electrode plate Q13, the mass proportions of lithium nickel cobalt manganese oxide and lithium manganese iron phosphate were each 50%.

With the negative electrode plate, separator, and electrolyte composition identical to those in Example 1, the hard-shell battery X13 was obtained.

### Comparative Example 1

Positive electrode plate: The first positive electrode slurry L was applied to both surfaces of the aluminum foil to form the first coating, and the second positive electrode slurry A was applied to the surface of the first coating to obtain the positive electrode plate Q14. In the active material layer of the positive electrode plate Q14, the mass proportions of lithium nickel cobalt manganese oxide and lithium manganese iron phosphate were each 50%.

With the negative electrode plate, separator, and electrolyte composition identical to those in Example 1, the hard-shell battery X14 was obtained.

### Comparative Example 2

Positive electrode plate: The first positive electrode slurry L was applied to both surfaces of the aluminum foil to form the first coating, and the second positive electrode slurry B was applied to the surface of the first coating to obtain the positive electrode plate Q15. In the active material layer of the positive electrode plate Q15, the mass proportions of lithium nickel cobalt manganese oxide and lithium manganese iron phosphate were each 50%.

With the negative electrode plate, separator, and electrolyte composition identical to those in Example 1, the hard-shell battery X15 was obtained.

### Comparative Example 3

Positive electrode plate: The second positive electrode slurry A was applied to both surfaces of the aluminum foil to form the first coating, and the first positive electrode slurry L was applied to the surface of the first coating to obtain the positive electrode plate Q16. In the active material layer of the positive electrode plate Q16, the mass proportions of lithium nickel cobalt manganese oxide and lithium manganese iron phosphate were each 50%.

With the negative electrode plate, separator, and electrolyte composition identical to those in Example 1, the hard-shell battery X16 was obtained.

Peel strength tests were conducted on the positive electrode plates using the following method:
1. The electrode plate to be tested was cut using a blade into a sample with a width of 30 mm and a length of 100-160 mm.
2. The special double-sided tape was attached to the steel plate, with the tape having a width of 20 mm and a length of 90-150 mm.
3. The electrode plate sample obtained in step 1 was attached to the double-sided tape, with the test surface facing down, and rolled three times in the same direction using a pressure roller.
4. A paper strip with a width equal to the electrode plate and a length 80-200 mm longer than the sample was inserted under the electrode plate and secured with corrugated adhesive tape.
5. The peel strength test was performed using a SUNS tensile testing machine.

The test results are recorded in Table 3.

Cycling performance tests were conducted on the hard-shell batteries obtained in each example using the following method:

At 25°C, the hard-shell battery was fully discharged at 1C before testing. The testing process was as follows: The hard-shell battery was charged at a constant current of 1/3C to a voltage of 4.25 V, and then charged at a constant voltage of 4.25 V to a current of 0.02C. After left standing for 10 minutes, the lithium-ion battery was discharged at a constant current of 1/3C to a voltage of 2.8 V. This was one charge-discharge cycle, and the discharge capacity of this cycle was recorded as the discharge capacity of the first cycle. The hard-shell battery was subjected to 400 charge-discharge cycles using the above method, and the discharge capacity retention rate of the hard-shell battery was recorded.

The test results are recorded in Table 3.

**Table 3**

| | Peel strength (MPa) | Capacity retention rate (%) |
|---|---|---|
| Example 1 | 1.12 | 92 |
| Example 2 | 0.65 | 88 |
| Example 3 | 1.22 | 88 |
| Example 4 | 0.61 | 83 |
| Example 5 | 0.82 | 91 |
| Example 6 | 0.77 | 85 |
| Example 7 | 0.93 | 89 |
| Example 8 | 1.13 | 93 |
| Example 9 | 0.71 | 89 |
| Example 10 | 1.15 | 92 |
| Example 11 | 1.12 | 93 |
| Example 12 | 0.56 | 82 |
| Example 13 | 1.11 | 92 |
| Comparative Example 1 | 0.28 | 77 |
| Comparative Example 2 | 0.22 | 75 |
| Comparative Example 3 | 0.27 | 77 |

From Table 3, it can be seen that the positive electrode plate Q1, with the NCM layer using a PVDF copolymer and the LFMP layer using a PVDF homopolymer, achieves the maximum electrode plate peel strength of 0.8 MPa. Once the NCM layer is paired with a homopolymer-type PVDF, such as in plates Q14 and Q15, the peel strength of the cathode plate is significantly lower than that of Q1.

From Table 3, it can be seen that in Example 1, the NCM layer uses a copolymer-type PVDF and the LFMP layer uses a homopolymer-type PVDF. During long-term cycling, Example 1 exhibits stable capacity performance, maintaining a capacity retention rate of 92% after 400 cycles.

In Comparative Example 1, during long-term cycling, the battery experiences fast capacity decay, with a capacity retention rate of 77% after 400 cycles. This is because the binders for the two different types of active materials are not selectively paired. The PVDF homopolymer has poor compatibility with NCM, resulting in weak cohesion within the positive electrode plate. Consequently, the binder to fail to effectively bind particles during cycling, leading to particle isolation and additional capacity loss.

In Comparative Example 2, the capacity retention rate is 75% after 400 cycles. In Comparative Example 2, the active layer containing NCM uses a PVDF homopolymer binder, and the active layer containing LFMP uses a PVDF copolymer binder. Due to the poor compatibility between the PVDF homopolymer and NCM materials, the peel strength of the electrode plate is low. Therefore, compared to Example 1, the cycling improvement effect is significantly worse.

Although this application has been described with reference to preferred embodiments, various improvements can be made, and components therein can be replaced with equivalents without departing from the scope of this application. In particular, as long as no structural conflict exists, the technical features mentioned in each embodiment can be combined in any manner. This application is not limited to the specific embodiments disclosed in this specification but includes all technical solutions falling within the scope of the claims.

## Claims

1. A positive electrode plate, wherein the positive electrode plate comprises a positive electrode current collector and a positive electrode film layer disposed on at least one side of the positive electrode current collector, wherein the positive electrode film layer comprises one or more first active layers and one or more second active layers arranged along a thickness direction of the positive electrode current collector, the first active layers and the second active layers being alternately stacked;
the first active layer comprises a layered oxide active material and a first binder, the first binder comprising a first copolymer; and
the second active layer comprises a phosphate-based positive electrode active material and a second binder, the second binder comprising a fluorinated monomer homopolymer and/or a second copolymer, wherein monomers forming the first copolymer and the second copolymer each independently comprise a fluorinated monomer.

2. The positive electrode plate according to claim 1, wherein the fluorinated monomers forming the first copolymer and the second copolymer each independently comprise any one or more from a group of vinyl fluoride, vinylidene fluoride, trifluoroethylene, tetrafluoroethylene, hexafluoropropylene, and perfluoroalkyl vinyl ether; and optionally, the first copolymer and the second copolymer each independently comprise one or more selected from a group of vinylidene fluoride-hexafluoropropylene copolymer, vinylidene fluoride-ethylene oxide copolymer, vinylidene fluoride-tetrafluoroethylene copolymer, tetrafluoroethylene-hexafluoropropylene copolymer, tetrafluoroethylene-perfluoroalkyl vinyl ether copolymer, vinylidene fluoride-trifluoroethylene copolymer, vinylidene fluoride-trichloroethylene copolymer, vinylidene fluoride-vinyl fluoride copolymer, and vinylidene fluoride-hexafluoropropylene-tetrafluoroethylene copolymer.

3. The positive electrode plate according to claim 1 or 2, wherein the fluorinated monomers of the first copolymer and the second copolymer contain vinylidene fluoride; the first copolymer and the second copolymer each independently comprise one or more selected from a group of vinylidene fluoride-hexafluoropropylene copolymer, vinylidene fluoride-ethylene oxide copolymer, vinylidene fluoride-tetrafluoroethylene copolymer, vinylidene fluoride-trifluoroethylene copolymer, vinylidene fluoride-trichloroethylene copolymer, vinylidene fluoride-vinyl fluoride copolymer, and vinylidene fluoride-hexafluoropropylene-tetrafluoroethylene copolymer; and
optionally, molar percentages of structural units corresponding to vinylidene fluoride monomers in the first copolymer and the second copolymer are each independently 50% to 95%.

4. The positive electrode plate according to any one of claims 1 to 3, wherein the second binder is a fluorinated monomer homopolymer; and optionally, the fluorinated monomer homopolymer is a vinylidene fluoride homopolymer.

5. The positive electrode plate according to any one of claims 1 to 4, wherein weight-average molecular weights of the first copolymer, the second copolymer, and the fluorinated monomer homopolymer are each independently 100,000 Da to 1,000,000 Da.

6. The positive electrode plate according to any one of claims 1 to 4, wherein the positive electrode plate satisfies any one or more of the following conditions:
a mass percentage of the first binder in the first active layer is 0.5% to 2.5%;
a mass percentage of the second binder in the second active layer is 0.5% to 2.5%; and
the first active layer and the second active layer each independently comprise a conductive agent.

7. The positive electrode plate according to any one of claims 1 to 6, wherein a mixed slurry with a mass percentage of 10% formed by mixing the layered oxide active material with water has a pH value between 11 and 13; and optionally, the layered oxide active material comprises a ternary positive electrode material and/or a quaternary positive electrode material, optionally the layered oxide active material comprises one or more selected from a group of lithium nickel cobalt manganese oxide positive electrode active material, lithium nickel cobalt aluminate positive electrode active material, lithium nickel cobalt manganese aluminate positive electrode active material, doped or coated lithium nickel cobalt manganese oxide positive electrode active material, doped or coated lithium nickel cobalt aluminate positive electrode active material, and doped or coated lithium nickel cobalt manganese aluminate positive electrode active material.

8. The positive electrode plate according to claim 7, wherein a surface of the layered oxide active material has a first coating layer, wherein the first coating layer comprises one or more coating layers of carbon, conductive graphene, conductive polymer material, or oxide.

9. The positive electrode plate according to any one of claims 1 to 8, wherein a mixed slurry with a mass percentage of 10% formed by mixing the phosphate-based positive electrode active material with water has a pH value between 8 and 10; and optionally, the phosphate-based positive electrode active material comprises at least one of the following materials:
LiMn_{1-yF}e_{y}PO₄, wherein y is any value in a range of 0.001 to 0.5;
Li₁₊ₜMn_{1-c}Fe_{c}P_{1-z}R_{z}O₄, wherein t is any value in a range of -0.100 to 0.100, c is any value in a range of 0.001 to 0.500, z is any value in a range of 0.001 to 0.100, and R comprises one or more elements selected from B, S, Si, and N; and
Li_{1+w}AₘMn₁₋ᵤEᵤP₁₋ₐRₐO₄₋ₙDₙ, wherein A comprises one or more elements selected from Zn, Al, Na, K, Mg, Nb, Mo, and W, E comprises one or more elements selected from Zn, Al, Na, K, Mg, Mo, W, Ti, V, Zr, Fe, Ni, Co, Ga, Sn, Sb, Nb, and Ge, R comprises one or more elements selected from B, S, Si, and N, D comprises one or more elements selected from S, F, Cl, and Br, w is any value in a range of -0.100 to 0.100, m is any value in a range of 0.001 to 0.1, u is any value in a range of 0.001 to 0.500, a is any value in a range of 0.001 to 0.100, n is any value in a range of 0.001 to 0.1, and Li_{1+w}AₘMn₁₋ᵤEᵤP₁₋ₐRₐO₄₋ₙDₙ is electrically neutral.

10. The positive electrode plate according to claim 9, wherein a surface of the phosphate-based positive electrode active material has a second coating layer, wherein the second coating layer comprises one or more coating layers of pyrophosphate, phosphate, or carbon.

11. The positive electrode plate according to any one of claims 1 to 10, wherein arrangement of the positive electrode film layer comprises any one of the following manners:
one first active layer and one second active layer are arranged;
one first active layer and two second active layers are arranged, with the first active layer disposed between the second active layers; and
two first active layers and one second active layer are arranged, with the second active layer disposed between the first active layers.

12. The positive electrode plate according to any one of claims 1 to 11, wherein a ratio of a thickness of the first active layer to a thickness of the second active layer is 0.9:1 to 1.1:1.

13. A secondary battery, comprising a positive electrode plate and a negative electrode plate, wherein the positive electrode plate comprises the positive electrode plate according to any one of claims 8 to 11.

14. An electric apparatus, comprising a secondary battery, wherein the secondary battery comprises the secondary battery according to claim 13.
